(19) Europäisches Patentamt
European Patent Office
Office européen des brevets

(11) **EP 3 129 319 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(21) Anmeldenummer: **15713932.0**

(22) Anmeldetag: **09.04.2015**

(51) Int Cl.:
**B67C 3/00** *(2006.01)*

(86) Internationale Anmeldenummer:
**PCT/EP2015/057703**

(87) Internationale Veröffentlichungsnummer:
**WO 2015/155282 (15.10.2015 Gazette 2015/41)**

(54) **ANLAGE ZUM BEFÜLLEN VON BEHÄLTERN MIT EINER TRANSPORTEINRICHTUNG**

DEVICE FOR FILLING OF CONTAINERS WITH A CONVEYING DEVICE

DISPOSITIF POUR REMPLIR DES RECIPIENTS AVEC UN CONVOYEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014   DE 102014105034**

(43) Veröffentlichungstag der Anmeldung:
**15.02.2017   Patentblatt 2017/07**

(73) Patentinhaber: **KRONES Aktiengesellschaft 93073 Neutraubling (DE)**

(72) Erfinder:
• **BOCKISCH, Christian 93073 Neutraubling (DE)**
• **KLEIN, Robert 93073 Neutraubling (DE)**

(74) Vertreter: **Grünecker Patent- und Rechtsanwälte PartG mbB Leopoldstraße 4 80802 München (DE)**

(56) Entgegenhaltungen:
EP-A1- 0 412 373     WO-A1-2010/018224
DE-A1- 2 226 465     DE-A1-102010 053 772

## Beschreibung

Die vorliegende Erfindung betrifft eine Abfüllanlage zum Befüllen von Behältern, wie beispielsweise Dosen, in der getränkeverarbeitenden Industrie.

## Stand der Technik

Die Verwendung von Abfüllanlagen zum Befüllen von Behältern, wie beispielsweise Dosen, in der getränkeverarbeitenden Industrie ist hinlänglich bekannt. Diese Abfüllanlagen verfügen zumeist entweder über ein Karussell oder sind als Linearfüller ausgebildet. An der Abfüllanlage sind mehrere Füllstationen angeordnet, mit denen die Behälter befüllt werden können. Üblicherweise werden die Behälter über Transportbänder zugeführt. Bei der Zufuhr von Dosen ist häufig vorgesehen, dass die neuen Behälter zunächst ungeordnet palettenweise auf die Transporteinrichtung übergeben werden und anschließend vereinzelt werden.

Wird ein Produktwechsel angestrebt oder ist der Vorrat an abzufüllendem Produkt erschöpft, so verbleibt eine bestimmte Anzahl an Behältern, insbesondere bei lagenweiser Zuführung, auf der Transporteinrichtung. Da diese zumeist nicht direkt weiterverwendet werden können, müssen sie von der Transporteinrichtung entfernt und gegebenenfalls entsorgt werden, was je nach Herstellungspreis des Behälters und des Produkts mit hohen Verlusten verbunden ist.

Die WO 2010/018224 A1 beschreibt eine Abfüllanlage bei der zur Vermeidung von Ausschuss und Zeitverlust beim Sortenwechsel, die Zufuhr von Material, wie abzufüllendes Produkt oder Etiketten, in Abhängigkeit der noch zu behandelnden Behälter gesteuert wird. In der Anlage der WO 2010/018224 A1 werden die Behälter allerdings weder lagenweise zugeführt, noch wird die Anzahl der noch zuzuführenden Behälter gesteuert.

Aus der EP 0 412 373 A1 ist eine Vorrichtung zum lagenweisen Zuführen von Behältern bekannt, wobei die weitere Behandlung der Behältnisse sowie die Steuerung der Anzahl der noch zuzuführenden Behälter in der EP 0 412 373 A1 nicht thematisiert wird.

## Aufgabe

Ausgehend von dem bekannten Stand der Technik ist es Aufgabe der vorliegenden Erfindung, eine Abfüllanlage mit verminderter Ausschussrate und einer Zeitersparnis beim Sortenwechsel bei lagenweiser Zuführung der Behälter bereitzustellen.

## Lösung

Diese Aufgabe wird erfindungsgemäß durch die Abfüllanlage nach Anspruch 1 und das Verfahren zum Füllen von Behältern nach Anspruch 7 gelöst. Vorteilhafte Ausführungsformen der Erfindung sind in den Unteransprüchen erfasst. Die Abfüllanlage zum Befüllen von Behältern, wie beispielsweise Dosen, in der getränkeverarbeitenden Industrie umfasst wenigstens eine Füllstation, die an einen Produktvorlagebehälter angeschlossen ist, eine Transporteinrichtung, mit der Behälter zur Füllstation transportiert werden, und eine Behälteraufgabe, die Behälter der Transporteinrichtung lagenweise zuführt, wobei an der Transporteinrichtung ein Zähler angeordnet ist, der die Anzahl (K) der in der Transporteinrichtung befindlichen Behälter bestimmen kann wobei eine Steuereinheit vorgesehen ist, die in Abhängigkeit der im Produktvorlagebehälter vorhandenen Produktmenge (M) und der Anzahl (K) der in der Transporteinrichtung befindlichen Behälter die Behälteraufgabe steuert. Ein auf diese Weise ausgebildete Abfüllanlage erlaubt eine Reduzierung bzw. Minimierung des Ausschusses bei Produktwechsel oder Leerlauf des Produktvorlagebehälters.

In einer vorteilhaften Weiterbildung ist die Abfüllanlage dadurch gekennzeichnet, dass im Produktvorlagebehälter ein oder mehrere Sensoren zur periodischen oder kontinuierlichen Messung der im Produktvorlagebehälter vorhandenen Produktmenge (M) angeordnet sind, wobei die Sensoren der Steuereinheit ein für den Füllstand indikatives Signal übermitteln können. Das Vorsehen wenigstens eines oder mehrerer Sensoren erlaubt eine Echtzeitmessung des Füllstands des Produktvorlagebehälters und somit eine sehr genaue Berechnung bzw. Steuerung der Behälteraufgabe. Durch das Vorsehen mehrerer Sensoren wird eine gewisse Redundanz in der Messung erreicht.

Es kann vorgesehen sein, dass die Transporteinrichtung eine oder mehrere Inspektionseinrichtungen umfasst, die Behälter auf der Transporteinrichtung inspizieren und aus der Transporteinrichtung ausleiten können. Es ist somit möglich, fehlerhafte Behälter vor dem Befüllen direkt auszusortieren. Somit kann die Menge an befülltem Ausschuss vermindert werden. Von der Behälteraufgabe werden die Behälter in ein Behälter hohen Lagen aus n>1 Behältern in einem Aufgabeablauf der Transporteinrichtung zugeführt. Dabei können pro Aufgabeablauf einige zehn aber auch bis zu einige hundert Behälter an die Transporteinrichtung übergeben werden.

Weiterhin kann gemäß einer Ausführungsform der Abfüllanlage dadurch gekennzeichnet sein, dass die Behälter als ein Behälter hohe Lagen in einem Aufgabeablauf der Transporteinrichtung zugeführt werden können. Sind die Lagen jeweils nur einen Behälter hoch, so vereinfacht sich der Weitertransport der Behälter in der Transporteinrichtung.

Gemäß der Erfindung bestimmt die Steuereinheit eine m Anzahl an Lagen, die von der Behälteraufgabe der Transporteinrichtung zugeführt werden, aus

$$m = \left( \frac{M}{V} - K \right) : n \;,$$ wobei V das Behältervolumen angibt und die Anzahl m entweder a) $m = ((M\,div\,V)-K)div\,n$ oder b) $m = (((M\,div\,V)-K)div\,n)+1$ ist. So kann die Steuereinheit die Behälteraufgabe entweder so steuern, dass eine Lage weniger als eigentlich benötigt an die Transporteinrichtung übergeben wird, was dazu führt, dass eine gewisse Restmenge an Produkt im Produktvorlagebehälter verbleibt. Diese kann dann gegebenenfalls aus dem Produktvorlagebehälter ausgeleitet werden. Im zweiten Fall werden mehr Behälter an die Transporteinrichtung übergeben als mit der im Produktvorlagebehälter vorhandenen Produktmenge befüllt werden können, so dass am Ende des gesamten Füllvorgangs, in dem der Produktvorlagebehälter geleert wird, eine gewisse Anzahl an Behältern aus der Transporteinrichtung entfernt und gegebenenfalls entsorgt werden kann.

In einer Ausführungsform ist die Abfüllanlage dadurch gekennzeichnet, dass die Abfüllanlage einen Auslass umfasst, aus dem überschüssiges Produkt in Fall a) geleitet werden kann und/oder die Transporteinrichtung eine Ausleitvorrichtung umfasst, die überzählige Behälter in Fall b) aus der Transporteinrichtung ausleiten kann. Hier kann je nach Kostengründen abgewogen werden, ob entweder überschüssiges Produkt oder überschüssige Behälter entsorgt werden. Da zumeist die Herstellungskosten der Behälter deutlich höher sind als die Produktherstellungskosten, wird in vielen Fällen überschüssiges Produkt entsorgt werden.

Ein beispielsweise mit einer der obigen Abfüllanlagen realisiertes Verfahren zum Füllen von Behälter wie beispielsweise Dosen in der getränkeverarbeitenden Industrie, ist dadurch gekennzeichnet, dass ein Zuführen von Behältern zu einer Transporteinrichtung, die die Behälter zu einer Füllstation transportiert, von einer Steuereinheit in Abhängigkeit einer in einem mit der Füllstation verbundenen Produktvorlagebehälter vorhandenen Produktmenge (M) und der Anzahl (K) der in der Transporteinrichtung befindlichen Behälter gesteuert wird. Mit diesem Verfahren kann eine deutlich ökonomischere Zuführung von Behältern verwirklicht werden. Bei dem Verfahren werden die Behälter der Transporteinrichtung in ein Behälter hohen Lagen aus n>1 Behältern von einer Behälteraufgabe zugeführt, wobei n für eine Behältersorte konstant sein kann. So werden von der Behälteraufgabe beispielsweise einige zehn Behälter pro Aufgabeablauf oder einige hundert Behälter pro Aufgabeablauf an die Transporteinrichtung übergeben und von dieser weitertransportiert.

Es kann auch vorgesehen sein, dass die in der Transporteinrichtung befindlichen Behälter inspiziert werden und abhängig von dem Resultat ausgeleitet werden. So kann eine Kontrolle der der Transporteinrichtung zugeführten Behälter durchgeführt werden, bevor diese befüllt werden und gegebenenfalls eine Ausleitung von beschädigten oder ungenügenden Behältern bewirkt werden, bevor diese befüllt werden, so dass hier keine Verschwendung von Produkt erfolgt.

In einer Weiterbildung des Verfahrens wird die Produktmenge (M) im Produktvorlagebehälter kontinuierlich oder periodisch von einem oder mehreren Sensoren gemessen und ein für die Produktmenge indikatives Signal an die Steuereinheit gesendet. Dies erlaubt eine Echtzeitmessung des tatsächlichen Füllstands des Produktvorlagebehälters und somit eine sehr genaue Berechnung bzw. Steuerung der Behälteraufgabe in Echtzeit. Durch Vorsehen mehrerer Sensoren wird das Messverfahren redundant und robust gegenüber Ausfällen einzelner Sensoren.

Es ist vorgesehen, dass die Steuereinheit eine Anzahl m von der Transporteinrichtung zuzuführenden Lagen aus $m = \left( \dfrac{M}{V} - K \right) : n$ bestimmt wird, wobei V das Behältervolumen angibt und wobei die Anzahl m entweder

a)   $m = ((M \; divV)\text{-}K)divn$ oder b)   $m = (((M \; divV)\text{-}K)divn)+1$ ist. Mit dieser Ausführungsform des Verfahrens werden entweder etwas mehr Behälter an die Transporteinrichtung übergeben als mit der verbleibenden Produktmenge befüllt werden können oder es werden etwas weniger Behälter an die Transporteinrichtung übergeben als mit der verbleibenden Produktmenge befüllt werden könnten.

In einer Weiterbildung dieser Ausführungsform ist das Verfahren dadurch gekennzeichnet, dass in Fall a) das überschüssige Produkt aus dem Produktvorlagebehälter abgeführt wird und in Fall b) nicht mehr befüllte Behälter aus der Transporteinrichtung ausgeleitet werden. Auf diese Weise kann beispielsweise nach ökonomischen Gesichtspunkten entschieden werden, ob es sinnvoller ist, überschüssiges Produkt zu entsorgen oder überzählige Behälter aus der Transporteinrichtung zu entfernen und gegebenenfalls zu entsorgen.

In einer Ausführungsform ist das Verfahren dadurch gekennzeichnet, dass die Behälter der Transporteinrichtung in Abhängigkeit der in der Transporteinrichtung befindlichen Anzahl (K) Behälter zugeführt wird. Auf diese Weise kann eine kontrollierte Behälterübergabe an die Transporteinrichtung realisiert werden.

Weiterhin kann vorgesehen sein, dass die Zufuhr von Behältern zur Transporteinrichtung gestoppt wird, wenn sie $K \geq N$ Behälter in der Transporteinrichtung befinden, wobei N eine ganze Zahl ist. Wird die vorgesehene Anzahl N überschritten, kann so zunächst die Behälteraufgabe vollständig gestoppt werden und die Transporteinrichtung zumindest teilweise leergefahren werden.

**Kurze Beschreibung der Figuren**

Fig. 1        Schematische Darstellung der erfindungsgemäßen Abfüllanlage nach einer Ausführungsform.

Fig. 2        Schematische Darstellung einer weiteren Ausführungsform der Abfüllanlage.

Fig. 3a bis 3e    Schematische Darstellung des erfindungsgemäßen Verfahrens gemäß einer Ausführungsform.

**Ausführliche Figurenbeschreibung**

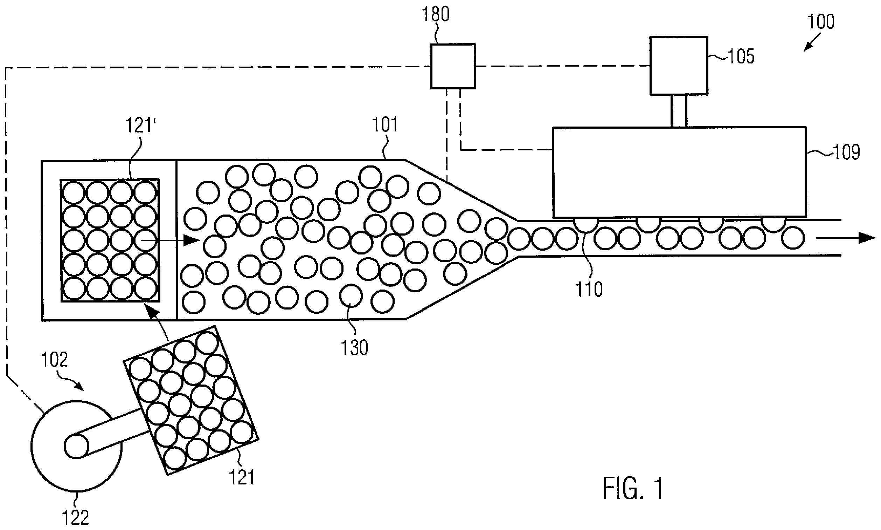

Fig. 1 zeigt eine erfindungsgemäße Abfüllanlage 100 gemäß einer Ausführungsform. Die dargestellte Abfüllanlage ist als Linearfüller ausgebildet und umfasst eine oder mehrere Füllstationen 110, die mit einem Produktvorlagebehälter 105 verbunden sind. Die Füllstationen 110 können beispielsweise an einem geeigneten Rahmen 109 montiert sein, in dem auch die Zuleitungen von dem Produktvorlagebehälter 105 zu den einzelnen Füllstationen 110 angeordnet sein können. Obwohl die Abfüllanlage 100 hier als linearer Füller dargestellt ist, kann auch vorgesehen sein, dass es sich um einen Karussellfüller handelt. Anstelle des Rahmens 109 kann dann ein sich drehendes Karussell vorgesehen sein, an dem die Füllstationen 110 befestigt sind.

In der hier dargestellten Ausführungsform ist weiterhin eine Transporteinrichtung 101 vorgesehen, die Behälter 130 den Füllstationen 110 zuführt. Diese Transporteinrichtung kann beispielsweise ein Förderband umfassen oder Halterungen, die die Behälter 130 den Füllstationen 110 zuführen, wie beispielsweise Neck-Handling-Halterungen oder Lufttransport. Die Transporteinrichtung 101 kann einen Einlaufbereich umfassen, in dem mehrere Behälter 130 beispielsweise ungeordnet auf einem relativ breiten Förderband transportiert werden. Dieser Bereich kann sich in Transportrichtung der Behälter 130, wie hier dargestellt, verjüngen, so dass spätestens im Bereich der Füllstationen 110 die Behälter 130 vereinzelt sind und den Füllstationen einzeln zugeführt werden können. Auch andere Ausführungsformen der Transporteinrichtung 101 sind denkbar. So kann, insbesondere bei Ausführung der Abfüllanlage als Karussell, ein Transport mit Hilfe von Drehsternen vorgesehen sein.

An die Transporteinrichtung angeschlossen ist eine Behälteraufgabe 102. Die Behälteraufgabe kann beispielsweise als schwenkbarer Roboterarm 122 ausgeführt sein, der eine Palette 121 mit Behältern auf die Transporteinrichtung 101 übergibt. Die übergebene Palette 121 kann dann beispielsweise mit Hilfe eines Abschiebers entleert werden. Auf der Palette 121 bzw. 121' kann eine oder mehrere Lagen von Behältern vorgesehen sein, so dass auf jeder Palette mehrere zehn oder sogar mehrere hundert Behälter, insbesondere Dosen, beispielsweise 500 Dosen, transportiert werden können.

Weiterhin ist eine Steuereinheit 180 vorgesehen, die über die gestrichelt dargestellten Verbindungen mit dem Produktvorlagebehälter 105, der Transporteinrichtung 101, der Behälteraufgabe 102 und gegebenenfalls den Füllstationen 110 verbunden ist. Erfindungsgemäß ist vorgesehen, dass die Steuereinheit 180 die Behälteraufgabe 102 und gegebenenfalls die Transporteinrichtung 101 in Abhängigkeit des Füllstands des Produktvorlagebehälters 105 steuern kann. So ist vorgesehen, dass die Steuereinheit 180 die Aufgabe weiterer Behälter durch die Behälteraufgabe 102 in Abhängigkeit der im Produktvorlagebehälter 105 vorhandenen Produktmengen und der Anzahl K der auf der Transporteinrichtung befindlichen Behälter steuert. Ist die verbleibende Produktmenge im Produktvorlagebehälter 105 so gering, dass nur noch die auf der Transporteinrichtung befindlichen Behälter 130 befüllt werden können, so beendet die Steuereinheit 180 die fortlaufende Zufuhr von neuen Behältern durch die Behälteraufgabe 102.

Dazu kann vorgesehen sein, dass die Steuereinheit 180 direkt mit Sensoren in der Produktvorlage 105 verbunden ist, wobei die Sensoren permanent oder in periodischen Abständen den Füllstand des Produktvorlagebehälters 105 messen und ein entsprechendes Signal an die Steuereinheit übermitteln. Weiterhin oder alternativ kann die Steuereinheit mit den Füllstationen 110 verbunden sein und die abgegebene Produktmenge bzw. die Anzahl der Füllvorgänge messen. Aus einem vorher bekannten Anfangsfüllstand des Produktvorlagebehälters und der abgegebenen Produktmenge kann die Steuereinheit so berechnen, wie viel Produkt noch im Produktvorlagebehälter 105 verbleibt und wie viele Behälter damit befüllt werden können. Zusätzlich ist die Steuereinheit 180 mit der Transporteinrichtung oder beispielsweise einer Messeinrichtung, wie einem Zähler, verbunden, der die Anzahl der auf der Transporteinheit befindlichen Behälter zählen kann. Ist diese Anzahl K größer als die Menge an Behältern, die mit der im Produktvorlagebehälter verbleibenden Produktmenge M befüllt werden oder gleich groß dieser Anzahl, so stoppt die Steuereinheit die Zufuhr weiterer Behälterlagen durch die Behälteraufgabe 102. So können anschließend sämtliche oder nahezu alle noch auf der Transporteinrichtung 101 befindlichen Behälter befüllt werden und nach Leerung des Produktvorlagebehälters verbleiben so nur noch wenige Behälter, die gegebenenfalls entsorgt werden müssen oder aber es verbleibt nur eine geringe Restmenge an Produkt im Produktvorlagebehälter, das entsorgt werden kann oder muss.

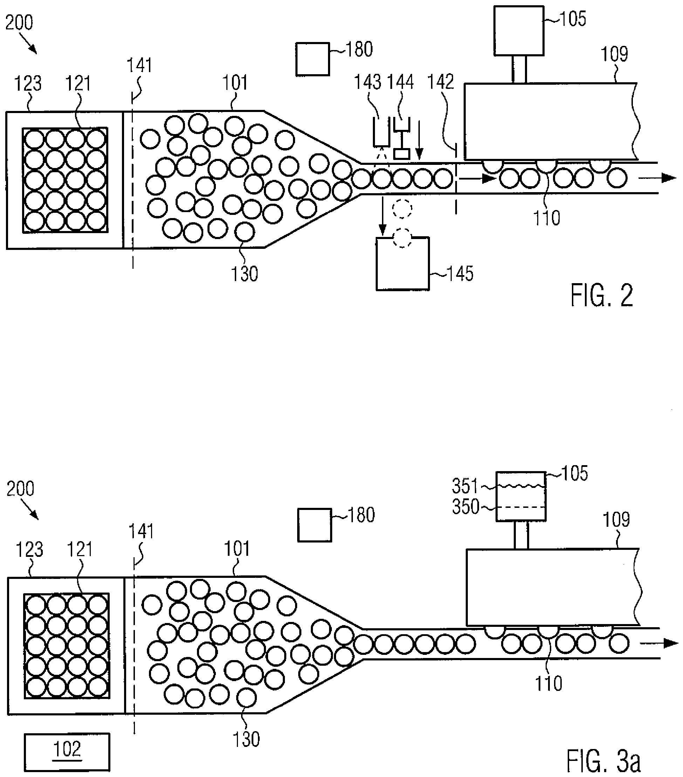

Fig. 2 zeigt eine weitere Ausführungsform der erfindungsgemäßen Abfüllanlage 200. Die Eigenschaften der Füllstationen und des Produktvorlagebehälters sowie der Transporteinrichtung 101 sind hier unverändert gegenüber denen in der Fig. 1 und werden daher nicht weiter ausgeführt. In dieser Ausführungsform ist vorgesehen, dass die Transporteinrichtung eine oder mehrere Inspektions- oder Kontrolleinheiten umfasst. Insbesondere umfasst die Transporteinrichtung zwei Lichtschranken 141 und 142, die den Einlauf einer Anzahl von Behältern auf die Transporteinrichtung und das Abführen der Behälter zu den einzelnen Füllstationen zählen. Hier findet eine Zählung der der Transporteinrichtung zugeführt Behälter und der von der Transporteinrichtung an die Füllstationen übergebenen Behälter statt, so dass die Gesamtzahl der in der Transporteinrichtung befindlichen Behälter bestimmt werden kann. Dabei werden die einzelnen Behälter von der Palette 121 von einem Aufgabebereich 123, der in Transportrichtung der Behälter stromaufwärts der Lichtschranke angeordnet ist, auf die Transporteinrichtung übergeben. Dabei durchlaufen sie die erste Lichtschranke 141 und können so als auf die Transporteinrichtung übertragen gezählt werden. Haben sie die Transporteinrichtung 101 so weit durchlaufen, dass sie an die Füllstation 110 übergeben werden, passieren sie die zweite Lichtschranke 142 und werden als an die Füllstation übergeben gezählt. Somit ergibt sich die Zahl der auf der Transporteinrichtung befindlichen Behälter aus der Differenz zwischen der Gesamtzahl der zugeführten Behälter und der Anzahl Behälter, die an die Füllstationen übergeben wurde. Anstelle der Lichtschranke kann auch eine Kamera oder Ähnliches vorgesehen sein, um die Behälter zu detektieren.

Zusätzlich oder alternativ dazu ist eine Inspektionseinheit 143 vorgesehen, die die Behälter inspiziert. Bei dieser Inspektionseinheit kann es sich beispielsweise um eine Kamera handeln, die den Behälter beispielsweise hinsichtlich der Etikettierung oder des Druckbildes oder auf Beschädigungen untersucht. Die Inspektionseinheit ist hier nicht auf eine Kamera beschränkt. Es sind auch andere Inspektionseinheiten denkbar.

Wird von der Inspektionseinheit festgestellt, dass ein Behälter nicht den Anforderungen entspricht, beispielsweise weil er beschädigt ist, so kann vorgesehen sein, dass er über eine entsprechende Ausleitvorrichtung 144 aus der Transporteinrichtung 101 ausgeleitet wird. Bei dieser Ausleitvorrichtung kann es sich beispielsweise um einen Pusher handeln, der den entsprechenden Behälter aus dem Transportband in einen dafür vorgesehenen Container 145 befördern kann. Wird der Transport der Behälter beispielsweise über Halterungen im Neck-Handling-Verfahren realisiert, so kann vorgesehen sein, dass der Behälter mit der entsprechenden Halterung aus der eigentlichen Transportstrecke auf eine alternative Route umgeleitet wird oder in einen unter der Transportstrecke befindlichen Container fallen gelassen wird. Vorzugsweise wird von der Inspektionseinheit ein Signal an die Steuereinheit übergeben, dass ein Behälter aus der Transporteinrichtung ausgeleitet wurde. So kann sichergestellt werden, dass auch bei Ausleiten einiger Behälter die Anzahl der noch in der Transporteinrichtung befindlichen Behälter genau bekannt ist. In dieser Ausführungsform ergibt sich die Anzahl der noch in der Transporteinrichtung befindlichen Behälter aus der Gesamtanzahl der der Transporteinrichtung übergebenen Behälter abzüglich der Anzahl der Behälter, die an die Füllstationen 110 übergeben wurden und abzüglich der aus der Transporteinrichtung ausgeleiteten Behälter.

Die hier beschriebene Ausleitvorrichtung 144 kann auch verwendet werden, um bei Leerstand des Produktvorlagebehälters die noch in der Transporteinrichtung verbleibenden Behälter auszuleiten.

Fig. 3a bis 3e zeigen den Ablauf eines erfindungsgemäßen Verfahrens zum Befüllen von Behältern, insbesondere Dosen, unter Verwendung einer Abfüllanlage gemäß beispielsweise einer der Ausführungsformen aus Fig. 1 oder 2. In Fig. 3a ist der Produktvorlagebehälter 105 gefüllt, was an dem Füllstand 351 schematisch dargestellt ist. Die Steuereinheit kann bereits bei diesem Füllstand berechnen, wie viele Behälter noch mit dem Produkt im Produktvorlagebehälter befüllt werden können, sie kann jedoch auch eine zunächst ungehinderte Aufgabe weiterer Behälter durch die Behälteraufgabe 102 steuern, da der Füllstand 351 des Produktvorlagebehälters hier einem Füllstand entspricht, mit dem noch wesentlich mehr Behälter befüllt werden können als die Anzahl K der Behälter, die sich in der Transporteinrichtung 101 befinden.

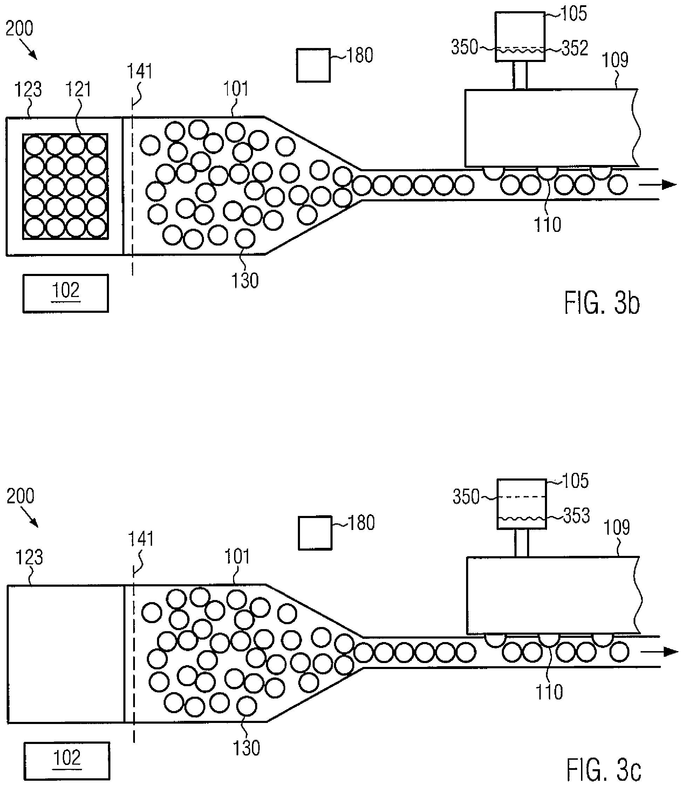

In Fig. 3b wurden weitere Behälter befüllt, so dass der Füllstand 352 im Produktvorlagebehälter 105 verbleibt. Dieser ist niedriger als ein gewisser vordefinierter Wert 350. Dieser vordefinierte Wert kann beispielsweise einer verbleibenden Anzahl von Behältern entsprechen, die mit dieser Menge noch befüllt werden können. Als Beispiel kann vorgesehen sein, dass der Füllstand 350 einem Füllstand entspricht, mit dem noch 10.000 weitere Behälter befüllt werden können. Spätestens ab diesem Füllstand 350 berechnet die Steuereinheit, wie viele Behälter durch die Behälteraufgabe 102 noch der Transporteinrichtung 101 zugeführt werden müssen. Dazu berechnet sie zunächst die Anzahl der mit dem Füllstand 352 noch zu befüllenden Behälter. Grundsätzlich ergibt sich diese aus dem Quotienten M durch V, wobei M die verbleibende Produktmenge gemäß dem Füllstand 352 ist und V das Volumen jedes einzelnen Behälters angibt. Dieser Wert entspricht also der Anzahl an Behältern, die noch befüllt werden können. Um nun zu bestimmen, wie viele Behälter von der Behälteraufgabe noch an die Transporteinrichtung übergeben werden müssen, bestimmt die Steuereinheit die Differenz aus der noch zu befüllenden Anzahl an Behältern und der Anzahl K der in der Transporteinrichtung befindlichen Behälter. Beispielsweise können von den 10.000 zu befüllenden Behältern bereits 4.500 in der Transporteinrichtung 101 befindlich sein, so dass durch die Behälteraufgabe von 5.500 weitere Behälter übergeben werden müssten. Da die nur teilweise Befüllung eines Behälters wenig sinnvoll ist, ist vorgesehen, dass der obige Quotient ohne Rest ermittelt wird, d.h. also, es wird die Anzahl der noch mit der Produktmenge M zu befüllenden Behälter bestimmt über $M \, div \, V$. Die Anzahl m der noch von der Behälteraufgabe an die Transporteinrichtung zu übergebenden Lagen an Behältern ergibt sich somit aus

$$m = \frac{M \, div \, V}{n}.$$ Es ist vorgesehen, dass diese Division ohne Rest durchgeführt wird, so dass eine ganze Anzahl von verbleibenden Lagen als Steuersignal an die Behälteraufgabe 102 übergeben wird. Somit entspricht m der Anzahl an vollständigen Lagen, die noch benötigt werden um den Produktvorlagebehälter zu leeren. Beträgt die Anzahl n an Behältern pro Lage 500, so ergibt sich für das obige Beispiel, dass die Behälteraufgabe noch m=11 Lagen zuführen muss.

Gemäß einer Ausführungsform kann vorgesehen sein, dass die zu bestimmende Anzahl m an noch verbleibenden Lagen, die der Transporteinrichtung zugeführt werden müssen, nur einmalig mit Unterschreiten des kritischen Füllstandes 350 durchgeführt wird. Da es jedoch beim Transport der Behälter zu Ausschuss kommen kann, da einige der Behälter beschädigt oder unzureichend sein können, kann in einer Ausführungsform auch vorgesehen sein, dass die Berechnung periodisch in Zeitabständen von beispielsweise einer Minute oder zwei Minuten durchgeführt wird, um die Menge an Ausschuss zu verringern.

Weiterhin kann vorgesehen sein, dass nur das Erreichen des kritischen Füllstandes als Signal an die Steuereinheit ausgegeben wird und eine kontinuierliche oder periodische Berechnung der noch benötigten Behälter basierend auf der Anzahl K der Behälter in der Transporteinrichtung befindlichen Behälter und der Anzahl ausgeleiteter und befüllter Behälter bestimmt wird. In diesem Fall ergibt sich die Anzahl an nötigen Lagen

aus $m = \dfrac{(M\ div\ V) - K + A - B}{n}$, wobei A die Anzahl der insgesamt ausgeleiteten Behälter nach Erreichen des kritischen Füllstandes angibt und B die Anzahl der befüllten Behälter nach Erreichen des kritischen Füllstandes angibt.

In Fig. 3c hat die Behälteraufgabe die letzte Lage von Behältern an die Transporteinrichtung 101 übergeben. Ab diesem Zeitpunkt werden nur noch die Behälter, die auf der Transporteinrichtung befindlich sind, den Füllstationen zugeführt. Da die von der Steuereinheit zuvor berechnete Menge an benötigten Behältern bzw. benötigten Lagen zumindest ungefähr der Anzahl der noch zu befüllenden Behälter mit der Restmenge an Produkt aus dem Produktvorlagebehälter entspricht, ist sichergestellt, dass mit der in Fig. 3c verbleibenden Menge 353 alle Behälter, die noch in der Transporteinrichtung 101 befindlich sind, befüllt werden können. Da zur Berechnung der Anzahl m an noch benötigten Lagen in obigen Gleichungen die Division ohne Rest durchgeführt wird, ist die berechnete Anzahl m in der Tat immer etwas niedriger oder höchstens gleich der tatsächlichen Anzahl an benötigten Lagen. Somit, und unter Berücksichtigung einer Anzahl von Behältern, die noch vor Befüllung ausgeleitet werden weil sie beschädigt sind, wird mit dem beschriebenen Steuerverfahren wahrscheinlich Restprodukt im Produktvorlagebehälter verbleiben und alle Behälter auf der Transporteinrichtung werden befüllt.

Ist dies der Fall, so ist die Transporteinrichtung 101 bei Erreichen eines minimalen Füllstands 354 von verbleibendem Produkt im Produktvorlagebehälter 105 leer, alle Behälter 130' sind befüllt und haben die Füllstationen passiert und die verbleibende Restmenge an Produkt gemäß dem Füllstand 354 kann entsorgt werden und beispielsweise ein neues Produkt in den Produktvorlagebehälter 105 eingefüllt werden.

Dieser Zustand wird erreicht, wenn die Anzahl m der von der Behälteraufgabe noch an die Transporteinrichtung zu übergebenden Lagen von Behältern gemäß obiger Formel berechnet wird, d.h. also, dass m = ((M divV)-K)divn ist. Da die Anzahl der in der Transporteinrichtung befindlichen Behälter höchstens kleiner wird, weil Behälter aufgrund von Mängeln aus der Transporteinrichtung ausgeschieden werden, stehen in dieser Ausführungsform im Extremfall nicht genug Behälter zur Verfügung, um eine Leerung des Produktvorlagebehälters 105 zu gewährleisten.

Beispielsweise abhängig von ökonomischen Erwägungen kann jedoch vorgesehen sein, dass eine Restmenge Behälter 130" in der Transporteinrichtung 101 übrig bleibt, wenn der Produktvorlagebehälter 105 bereits vollständig geleert ist. Dieser Fall kann eintreten, wenn das abgefüllte Produkt wertvoller ist als die Behälter 130. In diesem Fall ist vorgesehen, dass die durch die Steuereinheit durchgeführte Berechnung der noch nötigen Lagen m durchgeführt wird mit m = (((M divV)-K)divn)+1. In diesem Fall wird die Menge der noch benötigten Lagen für die Entleerung des Produktvorlagebehälters um eine Lage aufgerundet, womit also in jedem Fall mehr Behälter durch die Behälteraufgabe der Transporteinrichtung zugeführt werden, als mit der verbleibenden Produktmenge befüllt werden können. In dieser Ausführungsform kann so beispielsweise berücksichtigt werden, dass zumindest einige Behälter als Ausschuss bereits vor dem Befüllen aussortiert werden und es kann berücksichtigt werden, dass es aus ökonomischer Sicht günstiger ist, in der Transporteinrichtung verbleibende Behälter zu entsorgen als eine Restmenge an Produkt zu entsorgen. Wird die Berechnung der noch benötigten Anzahl m von Lagen periodisch und nicht nur einmal bei Unterschreiten des kritischen Füllstands 350 durchgeführt, so wird mit dieser Ausführungsform erreicht, dass der Produktvorlagebehälter 105 in jedem Fall geleert wird, gegebenenfalls jedoch einige Behälter 130" in der Transporteinrichtung 101 verbleiben und aussortiert werden.

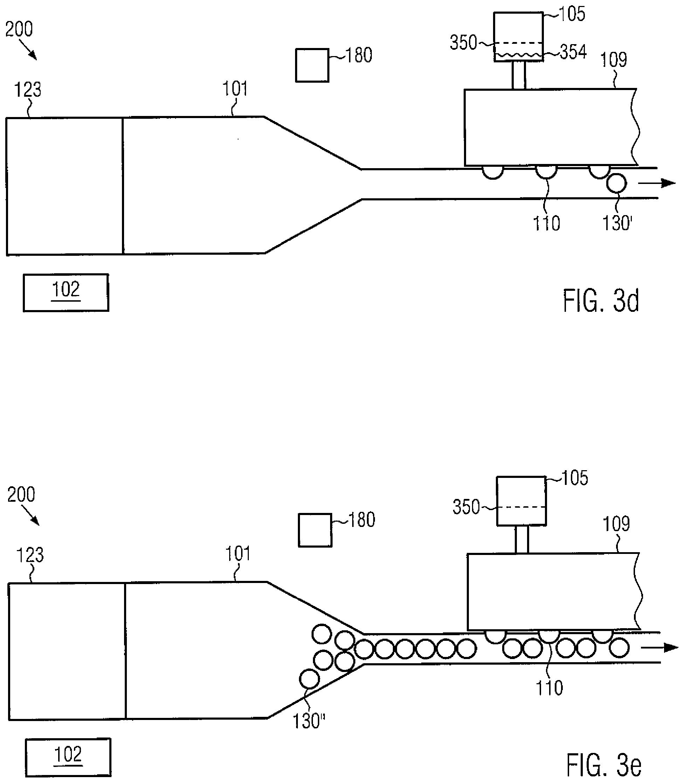

In jedem Fall wird durch die Ausführungsformen zur Steuerung der Behälteraufgabe durch die Steuereinheit 180 gemäß den Fig. 3d oder 3e sichergestellt, dass der Ausschuss an entweder Behältern (Fig. 3e) oder übrigem Produkt (Fig. 3d) trotz der lagenweisen Übergabe von Behältern auf die Transporteinrichtung 101 minimal ist. Im Falle der Fig. 3e kann dann beispielsweise über die in Fig. 2 beschriebene Ausleitvorrichtung eine Ausleitung der übrigen Behälter 130" erfolgen, bevor beispielsweise ein Sortenwechsel stattfindet und neue Behälter auf die Transporteinrichtung übergeben werden und neues Produkt in den Produktvorlagebehälter 105 eingefüllt wird. Verbleibt eine Produktmenge 354 im Produktvorlagebehälter 105, nachdem auch die letzten Behälter 130' die Füllstationen verlassen haben (Fig. 3d), kann über einen entsprechenden Auslass die verbleibende Produktmenge 354 aus dem Produktvorlagebehälter 105 ausgeleitet werden und so eine Verunreinigung des folgenden Produkts, insbesondere bei einer Sortenumstellung, mit dem ursprünglichen Produkt vermieden werden.

**Patentansprüche**

1. Abfüllanlage (100) zum Befüllen von Behältern (130) wie beispielsweise Dosen in der getränkeverarbeitenden Industrie, umfassend wenigstens eine Füllstation (110), die an einen Produktvorlagebehälter (105) angeschlossen ist, eine Transporteinrichtung (101), mit der Behälter zur Füllstation (110) transportiert werden, und eine Behälteraufgabe (102), die Behälter der Transporteinrichtung lagenweise (121, 121') zuführt, wobei an der Transporteinrichtung (101) ein Zähler angeordnet ist, der die Anzahl (K) der in der Transporteinrichtung (101) befindlichen Behälter bestimmen kann, wobei eine Steuereinheit (180) vorgesehen ist, die in Abhängigkeit der im Produktvorlagebehälter (105) vorhandenen Produktmenge (M) und der Anzahl (K) der in der Transporteinrichtung (101) befindlichen Behälter die Behälteraufgabe (102) steuert, wobei die Steuereinheit (180) eine Anzahl m an Lagen, die von der Behälteraufgabe (102) der Transporteinrichtung (101) zugeführt werden, aus $m = \left(\dfrac{M}{V} - K\right) : n$ bestimmt, wobei V das Behältervolumen und n die Anzahl der Behälter pro Lage angibt wobei n > 1 ist und die Anzahl m entweder a) $m = ((M\ divV)\text{-}K)divn$ oder b) $m = (((M\ divV)\text{-}K)divn)\text{+}1$ ist.

2. Abfüllanlage nach Anspruch 1, **dadurch gekennzeichnet, dass** im Produktvorlagebehälter (105) ein oder mehrere Sensoren zur periodischen oder kontinuierlichen Messung der im Produktvorlagebehälter (105) vorhandenen Produktmenge (M) angeordnet sind, wobei die Sensoren der Steuereinheit (180) ein für den Füllstand indikatives Signal übermitteln können.

3. Abfüllanlage nach Anspruch 1 oder 2, **dadurch gekennzeichnet, dass** die Transporteinrichtung (101) eine oder mehrere Inspektionseinrichtungen (143) umfasst, die Behälter auf der Transporteinrichtung (101) inspizieren und aus der Transporteinrichtung (101) ausleiten können.

4. Abfüllanlage nach einem der Ansprüche 1 bis 3, **dadurch gekennzeichnet, dass** $n \geq 100$ ist.

5. Abfüllanlage nach einem der Ansprüche 1 bis 4, **da-**

**durch gekennzeichnet, dass** jede Lage eine einschichtige Lage ist.

6. Abfüllanlage nach Anspruch 1, **dadurch gekennzeichnet, dass** die Abfüllanlage einen Auslass umfasst, aus dem überschüssiges Produkt in Fall a) geleitet werden kann und/oder die Transporteinrichtung eine Ausleitvorrichtung umfasst, die überzählige Behälter in Fall b) aus der Transporteinrichtung ausleiten kann.

7. Verfahren zum Füllen von Behälter wie beispielsweise Dosen in der getränkeverarbeitenden Industrie, wobei ein Zuführen von Behältern zu einer Transporteinrichtung (101), die die Behälter zu einer Füllstation (110) transportiert, von einer Steuereinheit (180) in Abhängigkeit einer in einem mit der Füllstation (110) verbundenen Produktvorlagebehälter (105) vorhandenen Produktmenge (M) und der Anzahl (K) der in der Transporteinrichtung (101) befindlichen Behälter gesteuert wird, wobei die Steuereinheit eine Anzahl m von der Transporteinrichtung (101) zuzuführenden Lagen aus m = (M/V - K) : n bestimmt, wobei V das Behältervolumen und n die Anzahl der Behälter pro Lage angibt, wobei n > 1 ist und wobei die Anzahl m entweder a) $m = ((M\ divV)\text{-}K)divn$ oder b) $m = (((M\ divV)\text{-}K)divn)\text{+}1$ ist.

8. Verfahren nach Anspruch 7, **dadurch gekennzeichnet, dass** $n \geq 100$ ist, wobei n für eine Behältersorte konstant ist.

9. Verfahren nach Anspruch 7 oder 8, **dadurch gekennzeichnet, dass** die in der Transporteinrichtung (101) befindlichen Behälter inspiziert werden und abhängig von dem Resultat ausgeleitet werden.

10. Verfahren nach einem der Ansprüche 7 bis 9, **dadurch gekennzeichnet, dass** die Produktmenge (M) im Produktvorlagebehälter (105) kontinuierlich oder periodisch von einem oder mehreren Sensoren gemessen wird und ein für die Produktmenge indikatives Signal an die Steuereinheit gesendet wird.

11. Verfahren nach Anspruch 7, **dadurch gekennzeichnet, dass** in Fall a) das überschüssige Produkt aus dem Produktvorlagebehälter (105) abgeführt wird und in Fall b) nicht mehr befüllte Behälter aus der Transporteinrichtung (101) ausgeleitet werden.

12. Verfahren nach einem der Ansprüche 7 bis 11, **dadurch gekennzeichnet, dass** die Behälter der Transporteinrichtung (101) in Abhängigkeit der in der Transporteinrichtung (101) befindlichen Anzahl (K) Behälter zugeführt wird.

## Claims

1. A filling system (100) for filling containers (130), such as cans, in the beverage-processing industry, comprising at least one filling station (110) connected to a product storage container (105), a transport device (101) by means of which containers are conveyed to the filling station (110), and a container feeding means (102) that feeds containers to the transport device in layers (121, 121'), the transport device (101) having arranged thereon a counter capable of determining the number (K) of containers in the transport device (101), wherein a control unit (180) is provided, which controls the container feeding means (102) depending on the product amount (M) available in the product storage container (105) and on the number (K) of containers in the transport device (101), wherein the control unit (180) determines a number m of layers, which are fed to the transport device (101) by the container feeding means (102),

   from $m = \left( \dfrac{M}{V} - K \right) : n$, where V stands for the container volume and n is the number of containers per layer and n>1 and the number m is either a) $m = ((M\ divV)\text{-}K)divn$ or b) $m = (((M\ divV)\text{-}K)divn)\text{+}1$.

2. The filling system according to claim 1, **characterized in that** the product storage container (105) has arranged therein one or a plurality of sensors for periodically or continuously measuring the product amount (M) available in the product storage container (105), the sensors being able to transmit to the control unit (180) a signal indicative of the filling level.

3. The filling system according to claim 1 or 2, **characterized in that** the transport device (101) comprises one or a plurality of inspection units (143) capable of inspecting containers on the transport device (101) and discharging them from the transport device (101).

4. The filling system according to one of the claims 1 to 3, **characterized in that** $n \geq 100$.

5. The filling system according to one of the claims 1 to 4, **characterized in that** each layer is a monolayer.

6. The filling system according to claim 1, **characterized in that** the filling system comprises an outlet through which superfluous product can be discharged in case a) and/or **in that** the transport device comprises a discharge device capable of discharging superfluous containers from the transport device in case b).

7. A method of filling containers, such as cans, in the beverage-processing industry, wherein a feeding of containers to a transport device (101), which conveys the containers to a filling station (110), is controlled by a control unit (180) depending on a product amount (M) available in a product storage container (105) connected to the filling station (110) and on the number (K) of containers in the transport device (101), wherein the control unit determines a number m of layers, which are to be fed to the transport device (101), from $m = \left( \dfrac{M}{V} - K \right) : n$, where V stands for the container volume and n is the number of containers per layers, wherein n>1 and the number m is either a) $m = ((M\ divV)\text{-}K)divn$ or b) $m = (((M\ divV)\text{-}K)divn)\text{+}1$.

8. The method according to claim 7, where $n \geq 100$, with n being constant for a container grade.

9. The method according to claim 7 or 8, **characterized in that** the containers in the transport device (101) are inspected and, depending on the result, discharged.

10. The method according to one of the claims 7 to 9, **characterized in that** the product amount (M) in the product storage container (105) is measured continuously or periodically by one or a plurality of sensors and that a signal indicative of the product amount is transmitted to the control unit.

11. The method according to claim 7, **characterized in that** in case a) the superfluous product is discharged from the product storage container (105) and in case b) containers which have not been filled are discharged from the transport device (101).

12. The method according to one of the claims 7 to 11, **characterized in that** the containers are fed to the transport device (101) depending on the number (K) of containers in the transport device (101).

## Revendications

1. Installation de remplissage (100) pour remplir des contenants (130), comme par exemple des boites ou canettes, dans l'industrie du traitement de boissons, comprenant au moins un poste de remplissage (110), qui est raccordé à un réservoir de réserve de produit (105), un dispositif de transport (101) à l'aide duquel des contenants sont transportés jusqu'au poste de remplissage (110), et un système d'alimentation en contenants (102), qui amène des contenants par plateau (121, 121') au dispositif de transport, installation

dans laquelle sur le dispositif de transport (101) est agencé un compteur qui est en mesure de déterminer le nombre (K) des contenants se trouvant dans le dispositif de transport (101),

dans laquelle il est prévu une unité de commande (180), qui commande le système d'alimentation en contenants (102), en fonction de la quantité de produit (M) présente dans le réservoir de réserve de produit (105) et du nombre (K) des contenants se trouvant dans le dispositif de transport (101),

dans laquelle l'unité de commande (180) détermine un nombre m de plateaux, qui doivent être amenés au dispositif de transport (101) par le système d'alimentation en contenants (102), à l'aide de l'équation

$$m = \left(\frac{M}{V} - K\right) : n$$

V indiquant le volume du contenant et n le nombre de contenants par plateau, le nombre n satisfaisant à la relation n>1, et le nombre m étant soit a) $m = ((M\,divV)\text{-}K)divn$ ou b) $m = (((M\,divV)\text{-}K)divn)+1$.

2. Installation de remplissage selon la revendication 1, **caractérisée en ce que** dans le réservoir de réserve de produit (105) sont agencés un ou plusieurs capteurs pour la mesure périodique ou continuelle de la quantité de produit (M) disponible dans le réservoir de réserve de produit (105), les capteurs étant en mesure de transmettre à l'unité de commande (180), un signal indicatif du niveau de remplissage.

3. Installation de remplissage selon la revendication 1 ou la revendication 2, **caractérisée en ce que** le dispositif de transport (101) comporte un ou plusieurs dispositifs d'inspection (143), qui est ou sont en mesure d'inspecter les contenants sur le dispositif de transport (101) et de les extraire du dispositif de transport (101).

4. Installation de remplissage selon l'une des revendications 1 à 3, **caractérisée en ce que** n≥100.

5. Installation de remplissage selon l'une des revendications 1 à 4, **caractérisée en ce que** chaque plateau est un plateau à une seule couche.

6. Installation de remplissage selon la revendication 1, **caractérisée en ce que** l'installation de remplissage comporte une sortie de laquelle peut être évacué du produit en excès dans le cas a), et/ou le dispositif de transport comprend un dispositif d'extraction, qui peut extraire du dispositif de transport, des contenants en surnombre, dans le cas b).

7. Procédé pour remplir des contenants, comme par exemple des boites ou canettes, dans l'industrie du traitement de boissons,

d'après lequel une amenée de contenants à un dispositif de transport (101), qui transporte les contenants jusqu'à un poste de remplissage (110), est commandée par une unité de commande (180) en fonction d'une quantité de produit (M) présente dans un réservoir de réserve de produit (105) relié au poste de remplissage (110) et du nombre (K) des contenants se trouvant dans le dispositif de transport (101),

d'après lequel l'unité de commande détermine un nombre m de plateaux, qui doivent être amenées au dispositif de transport (101), à l'aide de l'équation m = (M/V - K):n, V indiquant le volume du contenant et n le nombre de contenants par plateau, le nombre n satisfaisant à la relation n>1, et le nombre m étant soit a) $m = ((M\,divV)\text{-}K)divn$ ou b) $m = (((M\,divV)\text{-}K)divn)+1$.

8. Procédé selon la revendication 7, **caractérisé en ce que** n≥100, n étant constant pour un type de contenant.

9. Procédé selon la revendication 7 ou la revendication 8, **caractérisé en ce que** les contenants se trouvant dans le dispositif de transport (101) sont inspectés, et sont extraits en fonction du résultat.

10. Procédé selon l'une des revendications 7 à 9, **caractérisé en ce que** la quantité de produit (M) dans le réservoir de réserve de produit (105) est mesurée continuellement ou de manière périodique par un ou plusieurs capteurs, et un signal indicatif concernant la quantité de produit est envoyé à l'unité de commande.

11. Procédé selon la revendication 7, **caractérisé en ce que** dans le cas a), le produit en excès est évacué du réservoir de réserve de produit (105), et dans le cas b), des contenants, qui ne vont plus être remplis, sont extraits du dispositif de transport (101).

12. Procédé selon l'une des revendications 7 à 11, **caractérisé en ce que** les contenants sont amenés au dispositif de transport (101), en fonction du nombre (K) de contenants se trouvant dans le dispositif de transport (101) .

FIG. 1

EP 3 129 319 B1

FIG. 2

FIG. 3a

200

123  121  141  101  180  105
350  352  109

102  130  110

FIG. 3b

200

123  141  101  180  105
350  353  109

102  130  110

FIG. 3c

200

123  101  ~180  ~105
350~  ~354  109

102  110  130'

FIG. 3d

200

123  101  ~180  ~105
350~  109

102  130"  110

FIG. 3e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010018224 A1
- EP 0412373 A1